# EUROPEAN PATENT APPLICATION

(11) **EP 3 165 092 A1**
(43) Date of publication of application: **10.05.2017**
(21) Application number: 15193624.2
(22) Date of filing: 09.11.2015
(51) Int. Cl.: A01N 25/00, A01N 37/46, A01N 43/36, A01N 43/56, A01N 43/78, A01P 7/00, A01P 3/00

(54) **SEED COATING COMPOSITION**

(71) Applicant: Incotec Holding B.V., 1601 BL Enkhuizen (NL)
(72) Inventor: BUENO, Amy Nicole, 1601 BL Enkhuizen (NL); WIPPICH ANDRADE, Carolina Amanda, 1601 BL Enkhuizen (NL); GLAS, Jantien, 1601 BL Enkhuizen (NL); GARNIER, Jérôme Sylvain, 1601 BL Enkhuizen (NL); DOBROWOLSKA, Marta Edyta, 1601 BL Enkhuizen (NL); ANTHONY, Renil John, 1601 BL Enkhuizen (NL); SAMUELS, Pieter Wilhelmus Johannes, 1601 BL Enkhuizen (NL); MEYER, Terry Eu Claire, 1601 BL Enkhuizen (NL)
(74) Representative: Karfopoulos, Alexis Theo

(57) **Abstract**

The invention is directed to a seed coating composition, to a combination of said seed coating composition with one or more active ingredients, to a method for improving the bio-efficacy of an active ingredient in a seed coating, and to a coated seed.

The seed coating composition of the invention comprises one or more biologically active ingredients, and further comprises
- a wax and/or polymeric carbohydrate and wherein said seed coating composition has an amount of polymeric binder excluding wax and polymeric carbohydrate of 10 % or less by total weight of the wax and polymeric carbohydrate together; or
- a binder and wherein said seed coating composition comprises at least one vegetable oil.

## Description

The invention is directed to a seed coating composition, to a combination of said seed coating composition with one or more active ingredients, to a method for improving the bio-efficacy of an active ingredient in a seed coating, and to a coated seed.

Plant seed is often coated before sowing, for example, to protect seeds from damage during handling and/or to improve handling properties. Seeds are often coated to provide useful substances (active ingredients) to the seed and the seedlings upon germination, for example, plant nutrients, growth stimulating agents, and plant protective products. An important advantage of providing active ingredients in a seed coating is that it allows for a precise and controlled release and dose per seedling. Typical seed coating methods include film coating, pelleting and encrusting of seed.

The seed coating can contain many ingredients, and each of these ingredients have their advantages and disadvantages. One of the disadvantages that may occur when applying active ingredients in a coating composition is that, depending on the nature of the coating, the type of active ingredient, and the solubility thereof, the active ingredient may be retained in the coating or released more slowly than required and the resulting efficacy of the active ingredient for the seed or plant may be decreased. In particular, the rise of hydrophobic and/or water insoluble active ingredients brings new challenges for formulators of seed coating compositions. The active ingredients should still have sufficient mobility in order to adequately perform their function, but on the other hand the seed coating itself should have the conventional and desirable seed coating properties, such as water permeability, and should not negatively affect seed germination.

Some attempts have been made in the art to include hydrophobic active ingredients in a seed coating.

WO-A-2001/010212, for instance, describes a composition that may comprise a hydrophobic active ingredient, wherein the composition is based on a water-in-oil polymer dispersion.

In spite of these prior attempts, there is still a need in the art to provide a seed coating composition which facilitate the overall movement of active ingredients, while preserving the usual important properties of the seed coating.

An object of the invention is to address this need in the art and overcome disadvantages of prior art seed coating compositions.

The inventors found that this object can, at least in part, be met by using special seed coating formulations as described herein.

Accordingly, in a first aspect the invention is directed to a seed coating composition for combining with one or more biologically active ingredients, wherein said seed coating composition comprises a wax and/or polymeric carbohydrates and wherein said seed coating composition has an amount of polymeric binder excluding wax and/or polymeric carbohydrates of less than 10 % by total weight of the wax and polymeric carbohydrates together.

It was surprisingly found that the seed coating composition of the invention allows for improved bio-efficacy of the active ingredient. Active ingredients were better released from the seed coating to perform their desired effect, causing better bio-efficacy. At the same time, the unconventional seed coating compositions of the invention surprisingly are able to retain desirable seed coating properties such as water-permeability, good abrasion resistance, low dust emissions, short drying time, good flow ability and plant ability, low clumping, good cosmetics and/or coverage.

The term "seed" as used in this application is meant to refer in particular to the ripened ovule of gymnosperms and angiosperms, which contains an embryo surrounded by a protective cover. In particular, the term covers cereal kernels. The protective cover can comprise the seed coat (testa). Some seeds comprise a pericarp or fruit coat around the seed coat. In particular, when this layer is closely adhered to the seed, as in cereal kernels, it is in some cases referred to as a caryopsis or an achene. As used in this application, the term "seed coat" is meant to include a caryopsis or an achene. In practical terms, the term "seed" includes but is not restricted to anything that can be planted in agriculture to produce plants, including pelleted seeds, true seeds, plant seedlings, rootstock, regenerable and plant forming tissue, and tubers or bulbs.

The term "coating" as used in this application, is meant to refer to applying material to a surface of a seed, for instance as a layer of a material around a seed. Coating includes film coating, pelleting, and encrusting or a combination of these techniques. Pellets obtained with pelleting are also known as seed pills. The coating is preferably applied over substantially the entire surface of the seed, such as over 90 % or more of the surface area of the seed, to form a layer. However, the coating may be complete or partial, for instance over 20 % or more of the surface area of the seed, or 50 % or more.

The term "seed coating composition" as used in this application is meant to refer to a composition to be used for coating of seed, possibly after combination with other additives, such as plant protective product formulations, diluents such as water, nutrients, and/or inoculants such as beneficial fungi or bacteria. Hence, the term includes both compositions that do and do not contain plant protective product formulations.

The term "plant enhancing agent" as used in this application is meant to refer to any component that is directly or indirectly advantageous for a plant or a plant seed, for instance through a biological effect on the plant, seed, or on organisms harmful for a plant such as fungi, pests and insects. Plant enhancing agents include plant protective products, safners, growth promoters, growth regulators, and the like.

The seed is a plant seed, for example a seed of an agricultural crop, a vegetable seed, a herb seed, a wildflower seed, an ornamental seed, a grass seed, a tree seed, or a bush seed.

Preferably, the plant seed is of an agricultural crop. The seed may be of the order of *Monocotyledoneae* or of the order of *Dicotyledoneae.* Suitable seeds include seed of soybean, cotton, corn, peanut, maize, wheat, barley, oat, rye triticale, mustard, oil seed rape (or canola) sunflower, sugar beet, safflower, millet, chicory, flax, rapeseed, buckwheat, tobacco, hemp seed, alfalfa, signal grass, clover, sorghum, chick pea, beans, peas, vetch, rice, sugar cane, and linseed. Examples of suitable vegetable seeds include asparagus, chives, celery, leek, garlic, beetroot, spinach, beet, curly kale, cauliflower, sprouting broccoli, savoy cabbage, white cabbage, red cabbage, kohlrabi, Chinese cabbage, turnip, endive, chicory, water melon, melon, cucumber, gherkin, marrow, parsley, fennel, pea, beans, radish, black salsify, eggplant, sweet corn, pop corn, carrot, onion, tomato, pepper, lettuce, snap bean, cucurbit, shallot, broccoli, *Brassica,* and Brussels sprout.

Preferably, the plant seed is capable of germinating. Optionally, the seed may be deprived of husk (so-called husked seed or de-hulled seed). The seed may be primed or not primed (having been subjected to a treatment to improve the germination rate, e.g. osmopriming, hydropriming, matrix priming).

According to this aspect of the invention, the amount of polymeric binder in seed coating composition excluding wax and/or polymeric carbohydrates can be 10 % or less by total weight of the wax and polymeric carbohydrates together, preferably, the amount of polymeric binder excluding wax and/or polymeric carbohydrates is 8 % or less by total weight of the wax and polymeric carbohydrates together, such as 6 % or less, 4 % or less, 2 % or less, or 1 % or less. More preferably, the seed coating composition is essentially free from polymer binder excluding wax and/or polymeric carbohydrates. This means that other than wax or polymeric carbohydrates or a combination of wax and polymeric carbohydrates essentially no polymeric binders are present in the seed coating composition. Trace amounts, though, may still be present, such as amounts of 0.1 % or less by total weight of the wax and polymeric carbohydrates together, or 0.05 % or less. Most preferably, the seed coating composition is free from polymeric binder excluding wax and/or polymeric carbohydrates. Various polymeric carbohydrates exist. Examples thereof include starch, cellulose (and derivatives thereof), and dextrins (including cyclodextrins). In an embodiment, the amount of polymeric binder in seed coating composition excluding wax and/or starch and/or cellulose can be 10 % or less by total weight of the wax and polymeric carbohydrates together, preferably, the amount of polymeric binder excluding wax and/or starch and/or cellulose is 8 % or less by total weight of the wax and polymeric carbohydrates together, such as 6 % or less, 4 % or less, 2 % or less, or 1 % or less. In a further embodiment, the amount of polymeric binder in seed coating composition excluding wax and/or starch can be 10 % or less by total weight of the wax and polymeric carbohydrates together, preferably, the amount of polymeric binder excluding wax and/or starch is 8 % or less by total weight of the wax and polymeric carbohydrates together, such as 6 % or less, 4 % or less, 2 % or less, or 1 % or less.

In accordance with the invention, then said seed coating composition can comprise the wax and/or polymeric carbohydrates in an amount of 10-50 % by total weight of the wax and polymeric carbohydrates together (i.e. the sum of total wax and starch in the seed coating composition), preferably in an amount of 10-45 %, more preferably in an amount of 20-40 %.

The wax may be selected from the group consisting of natural wax, mineral wax and synthetic wax or a combination thereof. Preferably, the wax is selected from the group consisting of polyethylene wax, carnauba wax, paraffin wax, polypropylene wax, oxidised polyethylene wax, montan wax, ceresin wax, ozocerite, peat wax, Fischer-Tropsch wax, amide wax, ethylene-acrylic acid wax, polyolefin wax, ethylene *bis* stearamide wax, bees wax, lanolin wax, sugar cane wax, palm wax, and vegetable wax. It is also possible that mixtures of two or more waxes are present in the seed coating composition of the invention. In a preferred embodiment, the wax is selected from the group consisting of polyethylene wax, Fischer-Tropsch wax, and carnauba wax. The wax can be an anionic wax, a non-ionic wax or a cationic wax. Most preferably, the wax can be anionic or non-ionic. Cationic waxes may give rise to flocculation problems when the seed coating composition is combined with anionically stabilised active ingredients.

The starch may be derived from a plant source including corn/maize, rice, tapioca, and potato. Derivatives of starch obtained from these plant sources that are modified through chemical/physical processes including but not limited to hydrolysis, esterification, etherification, crosslinking, grafting, oxidation and acetylation or a combination of these are also considered here. Also included are starches that are modified through breeding and genetics such as waxy maize starch, resistant starch and others.

The cellulose may be derived from a plant source or recycled material. Derivatives of cellulose synthesized using esterification and etherification are also considered in this embodiment. Additionally, hemicellulose derived from plant materials and its derivatives are included here.

If a binder other than wax or starch is present, then the binder may, for example, be selected from the group consisting of polyvinyl acetates, polyvinyl acetate copolymers, polyvinyl alcohols, polyvinyl alcohol copolymers, polyurethane, celluloses (including ethylcelluloses, methylcelluloses, hydroxymethylcelluloses, hydroxypropylcelluloses, carboxymethylcelluloses, and hydroxymethylpropylcelluloses), polyvinylpyrrolidones, dextrins, maltodextrins, polysaccharides (other than starch), fats, oils, proteins, gum arabics, shellacs, vinylidene chloride, vinylidene chloride copolymers, calcium lignosulphonates, polyacrylates, acrylic copolymers, polyvinylacrylates, zeins, casein, gelatine, chitosan, pullulan, polyethylene oxide, polyethylene glycol, ethylene vinylacetate, acrylamide polymers, acrylamide copolymers, polyhydroxyethyl acrylate, methylacrylimide monomers, poly(*N*-vinylacetamide), sodium alginate, polychloroprene and syrups. These binders may be used alone or in combination of two or more. Preferred binders can be selected from the group consisting of polyvinyl acetates, polyvinyl alcohols, hydroxypropylmethylcellulose, polysaccharides (other than starch), proteins, polyethylene glycol, polyvinyl pyrrolidones, and polyacrylates.

In a second aspect, the invention is directed to a seed coating composition for combining with one or more biologically active ingredients, wherein said seed coating composition comprises a binder and wherein said seed coating composition comprises at least one vegetable oil. The vegetable oil may be present in pure form or as a derivative.

In accordance with this second aspect of the invention, the binder can, for example, be selected from the group consisting of polyvinyl acetates, polyvinyl acetate copolymers, polyvinyl alcohols, polyvinyl alcohol copolymers, polyurethane, celluloses (including ethylcelluloses, methylcelluloses, hydroxymethylcelluloses, hydroxypropylcelluloses, carboxymethylcelluloses, and hydroxymethylpropylcelluloses), polyvinylpyrrolidones, dextrins, maltodextrins, polysaccharides (including starch), fats, oils, alkyds, proteins, gum arabics, shellacs, vinylidene chloride, vinylidene chloride copolymers, calcium lignosulphonates, polyacrylates, polyacrylic esters, polyacrylic esters copolymers, styrene-acrylic copolymers, starches, polyvinylacrylates, styrene-butadiene copolymers, zeins, casein, gelatine, chitosan, pullulan, polyethylene oxide, polyethylene glycol, polypropylene glycol, ethylene vinylacetate, acrylamide polymers, acrylamide copolymers, polyhydroxyethyl acrylate, methylacrylimide monomers, poly(*N*-vinylacetamide), sodium alginate, polychloroprene and syrups. Also waxes such as carnauba wax, paraffin wax, polyethylene wax, bees wax, and polypropylene wax can be used as a binder. These binders may be used alone or in combination of two or more. Preferred binders can be selected from the group consisting of polyvinyl acetates, polyvinyl alcohols, hydroxypropylmethylcellulose, polysaccharides (such as starch), proteins, polyethylene polypropylene glycol, polyvinyl pyrrolidones, and polyacrylates.

In a preferred embodiment, the binder is a water insoluble binder. The term "water insoluble binder" as used in this application is meant to refer to the binder being not soluble in water. The solubility of these binders in water at ordinary temperature (20 °C) and atmospheric pressure is typically 1 % by weight of the water solvent or less, such as about 0.5 % or less, preferably 0.1 % or less, even more preferably 0.05 % or less.

Suitable water insoluble binders can, for example, be selected from the group consisting of polyvinyl acetates, polyvinyl acetate copolymers, polyurethane, celluloses (including ethyl celluloses, water insoluble polymeric carbohydrates (including polysaccharides such as starch), fats, oils, alkyds, water insoluble proteins, shellacs, vinylidene chloride, vinylidene chloride copolymers, polyacrylic esters, polyacrylic esters copolymers, styrene-acrylic copolymers, polyvinylacrylates, styrene-butadiene copolymers, zeins, casein, chitosan, polypropylene glycol, and syrups. Also waxes such as carnauba wax, paraffin wax, polyethylene wax, bees wax, and polypropylene wax can be used as a binder. These water insoluble binders may be used alone or in combination of two or more. Preferred water insoluble binders can be selected from the group consisting of polyvinyl acetates, polysaccharides (such as starch), proteins, polypropylene glycol, and polyacrylates.

In accordance with the second aspect of the invention, the amount of binder in the seed coating composition can be in the range of 0.1-100 g per kg of the seed, preferably 0.5-50 g per kg of the seed, more preferably 1-20 g per kg of the seed. Typically, the amount of the water binder in the coating composition is 1 % or more by total weight of the coating composition, preferably 10 % or more. Typically, the amount of the binder in the coating composition is 80 % or less by total weight of the coating composition, preferably 60 % or less.

The seed coating composition in accordance with this second aspect further comprises at least one vegetable oil. Vegetable oils are commonly known in the art. The at least one vegetable oil can, for example, be selected from the group consisting of rapeseed oil, canola oil, soybean oil, coconut oil, corn oil, cottonseed oil, palm oil, sunflower oil, castor oil, grape seed oil, hemp seed oil, kapok oil, linseed oil, wild mustard oil, oiticica oil, olive oil, peanut oil, perilla oil, poppy seed oil, rubber seed oil, safflower oil, sesame oil, tall oil, tea-seed oil, tung oil, and ucuhuba oil. Preferred vegetable oils include rapeseed oil, canola oil, soybean oil, coconut oil, corn oil, cottonseed oil, palm oil, sunflower oil, linseed oil, olive oil and sesame oil.

The oil may be a chemically modified oil, such as an ethoxylated oil, or methylated oil. Examples thereof include ethoxylated soybean oil and methylated canola oil. The advantage of chemically modifying the oil is that it can be emulsified, meaning it can stabilise the active ingredient in a water-based system. It also contributes to reducing the strong barrier which is present at the cell membrane, which helps with the uptake during imbibition phase.

The amount of vegetable oil used in the seed coating composition according to the second aspect of the invention is preferably 1 % or more by total weight of the binder and vegetable oil together, preferably 2 % or more, such as 5 % or more. Typically, the amount of the binder in the coating composition is 40 % or less by total weight of the binder and vegetable oil together, preferably 30 % or less, such as 25 % or less.

In general, the preferred seed coating composition of all aspects of the invention is to be combined with one or more active ingredients (including plant enhancing agents, in particular plant protective products (also referred to as PPPs). Suitable examples of active ingredients, in particular plant enhancing agents, are fungicidal agents, bactericidal agents, insecticidal agents, nematicidal agents, molluscicidal agents, biologicals, acaricides or miticides, pesticides, and biocides. Further possible active ingredients include disinfectants, micro-organisms, rodent killers, weed killers (herbicides), attracting agents, (bird) repellent agents, plant growth regulators (such as gibberellic acid, auxin or cytokinin), nutrients (such a potassium nitrate, magnesium sulphate, iron chelate), plant hormones, minerals, plant extracts, germination stimulants, pheromones, biological preparations, *etc.*

In accordance with the invention, it is preferred that the one or more active ingredients that are to be combined with the seed coating composition comprise at least one hydrophobic and/or water insoluble active ingredient.

The amount of active ingredient applied, of course, strongly depends on the type of active ingredient and the type of seed used. Usually, however, the amount of one or more active ingredients is in the range of 0.001-200 g per kg of the seed. The skilled person is able to determine suitable amounts of active ingredient depending on the active ingredient and the type of seed used. It is common practice for the skilled person to use and follow the advice of the active ingredient suppliers (e.g., BASF, Bayer, Syngenta, DuPont, *etc*.), such as by using technical data sheets and/or follow recommendations.

Typical fungicidal agents include Captan (*N*-trichloromethyl)thio-4-cyclohexane-1,2-dicarboximide), Thiram tetramethylthioperoxydicarbonic diamide (commercially available as Proseed™), Metalaxyl (methyl-*N*-(2,6-dimethylphenyl)-*N*-(methoxyacetyl)-d,l-alaninate), Fludioxonil (4-(2,2-difluoro-1,3-benzodioxol-4-yl)-1-*H*-pyrrol-3-carbonitril; commercially available in a blend with mefonoxam as Maxim™ XL), difenoconazole (commercially available as Dividend™ 3FS), carbendazim iprodione (commercially available as Rovral™), ipconazole (commercially available as Rancona from Arista, formerly Agriphar or Chemtura), mefonoxam (commercially available as Apron™ XL), tebuconazole, carboxin, thiabendazole, azoxystrobin, prochloraz, prothioconazole (commercially available as Redigo from Bayer), sedaxane (commercially available as Vibrance from Syngenta), cymoxanil (1-(2-cyano-2-methoxyiminoacetyl)-3-ethylurea), fludioxonil, a mixture of metalaxyl, cymoxanil and fludioxonil commercially available as Wakil from Syngenta, and oxadixyl (N-(2,6-dimethylphenyl)-2-methoxy-N-(2-oxo-3-oxazolidinyl) acetamide). A fungicide can be included in the seed coating composition in an amount of 0.0001-10 % by total weight of the coated seeds.

Typical bactericidal agents include streptomycin, penicillins, tetracyclines, ampicillin, and oxolinic acid.

Typical insecticidal agents include pyrethroids, organophosphates, caramoyloximes, pyrazoles, amidines, halogenated hydrocarbons, neonicotinoids, and carbamates and derivatives thereof. Particularly suitable classes of insecticides include organophosphates, phenylpyrazoles and pyrethoids. Preferred insecticides are those known as terbufos, chlorpyrifos, fipronil, chlorethoxyfos, tefluthrin, carbofuran, imidacloprid, and tebupirimfos. Commercially available insecticides include imidacloprid (commercially available as Gaucho™), and clothianidin (commercially available from Bayer as Poncho™), thiametoxam (commercially available from Syngenta as Cruiser™), thiacloprid (commercially available as Sonido from Bayer), Cypermetrin (commercially available from Chemtura as Langis^{®)}, methiocarb (commercially available as Mesurol from Bayer), and fipronil (commercially available from BASF as Regent™). Insecticides that particularly suffer from reduced mobility include chlorantraniliprole (also known as rynaxypyr, 5-bromo-N-[4-chloro-2-methyl-6-(methylcarbamoyl)phenyl]-2-(3-chloropyridin-2-yl)pyrazole-3-carboxamide, commercially available as Coragen^{®} from DuPont) and cyantraniliprole (also known as cyazypyr, 3-bromo-1-(3-chloro-2-pyridyl)-4'-cyano-2'-methyl-6'-(methylcarbamoyl)pyrazole-5-carboxanilide).

Commercially available nematicidal agents include abamectin (commercially available from Syngenta as Avicta™) thiodicarb (commercially available from Bayer as Aeris™).

Typical molluscicidal agents include metaldehyde (commercially available from Lonza as Meta^{®}) or niclosamid (commercially available from Bayer as Bayluscide^{®}), Cyazypir and Rynaxypir (available from DuPont).

Examples of suitable biologicals include bacilli, Trichoderma, and the like, which have been identified as seed treatment materials to protect plants and/or enhance their health and/or productive capacity.

These lists are not exhaustive, new active ingredients are continuously developed and can be incorporated in the seed coating composition. Coating formulations are often packaged, stored and/or transported and only thereafter combined with formulations of such plant enhancing agents.

In a further aspect, the invention is directed to the combination of the seed coating composition of the invention (according to either the first or second aspect as described herein) with one or more active ingredients as described above.

The seed coating composition of the invention can comprise further components such as one or more selected from a wetting and dispersing additive (sometimes also referred to as pigment dispersant), a filler, a solvent, a thickener, a colorant, an anti-foaming agent, a preservative, a surfactant, a slip additive and an effect pigment.

Coating formulations are typically prepared by mixing one or more of the components with a suitable binder and/or wax, packaging, storing and/or transporting and are only thereafter combined with formulations of plant enhancing agents.

A wetting and dispersing agent can aid in mixing inorganic particles in the seed coating composition. Suitable wetting and dispersing additives include ionic and non-ionic products and include solutions of organo-modified polyacrylates, polyacrylates, sodium polyacrylate, polyurethane, phosphoric acid ester, star polymers, and/or modified polyethers. The wetting and dispersing additive can, for instance, be present in some embodiments of the seed coating composition of the invention in an amount of 0-40 % by total weight of the inorganic particles, such as 0.10-10 %.

Suitable thickeners include agar, carboxy methylcellulose, carrageen, chitin, fucoidan, ghatti, gum arabic, karaya, laminaran, locust bean gum, pectin, alginate, guar gum, xanthan gum, diutan gum, and tragacanth, bentonite clays, HEUR (hydrophobically modified, ethoxylated urethane) thickeners, HASE (hydrophobically modified, alkali-swellable emulsion) thickeners and polyacrylates. Gums are generally preferred because of their low cost, availability and superior ability to enhance the physical characteristics of the resultant film.

Examples of colourants include dyes or pigmented dispersions. Examples of suitable dyes include: anthraquinone, triphenylmethane, phthalocyanine and derivatives thereof, and diazonium salts. Pigment dispersions can contain pigments such as pigment red 112 (CAS No. 6535-46-2), pigment red 2 (CAS No. 6041-94-7), pigment red 48:2 (CAS No. 7023-61-2), pigment blue 15:3 (CAS No. 147-14-8), pigment green 36 (CAS No. 14302-13-7), pigment green 7 (CAS No. 1328-53-6), pigment yellow 74 (CAS No. 6358-31-2), pigment orange 5 (CAS No. 3468-63-1), pigment violet 23 (CAS No. 6358-30-1), pigment black 7 (CAS No. 97793-37-8), and pigment white 6 (CAS No. 98084-96-9). The colourant may be present in the seed coating composition in an amount of 0-50 % by total weight of the seed coating composition, such as 1-10 %.

Examples of suitable antifoaming agents include polyethylene glycol, glycerine, mineral oil defoamers, silicone defoamers, and non silicone defoamers (such as polyethers, polyacrylates), dimethylpolysiloxanes (silicone oils), arylalkyd modified polysiloxanes, polyether siloxane copolymer containing fumed silica. The antifoaming agent may be present in some embodiments of the seed coating composition in an amount of at least 1 ppm by weight, or 0.1-0.3 % by total weight of the seed coating composition.

Examples of suitable effect pigments include pearlescent pigment in different particle sizes. Effect pigments having a particle size of 15 µm or less, or a particle size of 60 µm or less are commonly used. The particle size of the effect pigments is normally not more than 200 µm, preferably not more than 100 µm. Usually, the particle size of the effect pigment is 1 µm or more. Another effect pigment can be aluminium. All effect pigments are commonly used to create a nice cosmetic look on the seeds.

A biocide can be included in some embodiments of the seed coating composition for instance as preservative, in order to prolong the shelf life of the seed coating composition before being applied to a seed, such as when being stored. Examples of suitable biocides include MIT (2-methyl-4-isothiazolin-3-one; CAS No. 2682-20-4) and BIT (1,2-benzisothiazolin-3-one; CAS No. 2632-33-5).

In an embodiment, the seed coating composition further comprises flakes of a translucent polymeric film on an inert carrier (a carrier which has no detectable, harmful consequences for the environment, in particular for the seed or the outgrowing plant in the quantities present) for providing the seeds with a light-reflecting appearance, such as described in WO-A-03/003812. Preferably, the translucent polymeric film comprises light-reflecting particles.

The seed coating composition further often comprises one or more solvents. Solvents may be selected from the group consisting of water, alcohols, and hydrocarbons. Also mixtures of solvents can be used. It is preferred that the solvent is liquid at 20 °C and 1 atm. Examples of suitable solvents include glycols and their esters and ethers, in particular ethylene and propylene glycols and their esters and ethers, for instance, esters and ethers with C₁-C₆ alkyl groups and/or aromatic groups, such as methyl, ethyl, propyl, butyl, benzyl and phenyl ethers, including mono ethers and dialkyl ethers, and esters of these ethers, such as acetates, and ethylene and propylene glycol esters, for instance of fatty acids; polyethylene glycol (PEG) and polypropylene glycol and esters thereof, especially with fatty acids; butyl cellosolve, butyl carbitol, polyethylene glycol; *N*-methylpyrrolidone, glycerine, alkyl alcohols with up to 10 carbon atoms, such as ethanol, propanol and butanol. Other examples of solvents include dipropylene glycol methyl ether and propylene glycol methyl ether. An important solvent is ethylene glycol. Further examples include propylene tetramer and synthetic ester oils such as lactate esters, particularly ethyl lactate and benzoate esters *e.g. iso*-propyl or 2-ethylhexyl benzoates. Aromatic hydrocarbons such as xylene, aliphatic and paraffinic solvents and vegetable oils can also be used as solvent. Aromatic solvents are less preferred.

The seed coating composition may also comprise components with a plasticising effect, such as surfactants or antifreeze agents. Common surfactants include amphiphilic organic compounds, usually comprising a branched, linear or aromatic hydrocarbon, fluorocarbon or siloxane chain as tail and a hydrophilic group. Some types of surfactants include non-ionic, anionic, cationic and amphoteric surfactants, and organosilicone and organofluorine surfactants. Some examples of surfactants include polyoxyethylene glycol and polyoxypropylene ethers and esters, in particular alkyl, aryl and alkylaryl ethers thereof, and sulphates, phosphates and sulphonic acid compounds of such ethers, glucoside (alkyl) ethers, glycerol esters, such as alkyl and fatty acid esters, sorbitan (alkyl) esters, acetylene compounds, cocamide compounds, block copolymers of polyethylene glycol and propylene glycol. Further examples of surfactants include alkylamine salts and alkyl quaternary ammonium salts, for example betain type surfactants, amino acid type surfactants; and polyhedric alcohols, fatty acid esters, in particular C₁₂-C₁₈ fatty acids, for instance of polyglycerin, pentaerythritol, sorbitol, sorbitan, and sucrose, polyhydric alcohol alkyl ethers, fatty acid alkanol amides, and propoxylated and ethoxylated compounds such as fatty alcohol ethoxylates, polyethyxlated tallow amine and alkylphenol ethoxylates. Some examples of anionic surfactants include carboxylic acids, copolymers of carboxylic acids, sulphates, sulphonic acid compounds and phosphates, for example lignin sulphonates and (linear) alkylaryl sulphonates.

Anti-freeze agents include for example: ethylene glycol, propylene glycol, 1,3-butylene glycol, hexylene glycol, diethylene glycol, and glycerin, with the preferred glycol being ethylene glycol and propylene glycol.

The seed coating composition of the invention may be applied to the seed in conventional manners.

In an embodiment, the seed is not yet provided with artificial layers prior to applying the seed coating composition, for example layers comprising a binder, such as a polymer. Accordingly, the seed coating composition is preferably applied directly on the natural outer surface of the seed. Nonetheless, it is possible that the seed surface has undergone a surface treatment prior to applying the seed coating composition. It is possible that such surface treatment does not entail the provision of an artificial layer, but involves a physical change or modification of the surface of part of the seed or the entire surface of the seed. For example, the surface treatment may involve increasing the surface roughness of the seed, such as by selective removal of parts of the seed coat, selective deformation of the seed coat, or a combination thereof. Typically, the treatment may involve introducing micro roughness on the seed surface. It is also possible that the seed surface is subjected to a surface treatment that does involve the provision of an artificial layer, such as the application of a primer coating layer on the seed surface. Other suitable surface treatments include, e.g., plasma surface treatment, contacting the seed with an abrasive material, exposure to hot and humid air, flame treatment, laser treatment, and electron beam surface treatment.

Preferably, the coating composition is applied as a liquid composition and/or latex composition and thereafter solidified (including cured and/or dried) to form a seed coating. The term "liquid coating composition" as used in this application is meant to include coating compositions in the form of a suspension, solution, emulsion, or dispersion.

Conventional means of coating may be employed for coating the seeds. Various coating machines are available to the person skilled in the art. Some well-known techniques include the use of drum coaters, fluidised bed techniques, rotary coaters (with and without integrated drying), and spouted beds. Suitably, the seed coating composition is applied to the seed by a rotary coater, a rotary dry coater, a pan coater or a continuous treater.

Typically, the amount of seed coating composition applied to the seed can be in the range of 0.5-50 g per kg seed, such as 1-40 g per kg seed, 2-35 g per kg seed, or 3-30 g per kg seed.

The seed coating composition can, for instance, be applied by film coating, spraying, dipping, or brushing of the seed coating composition. Optionally, it is applied at a temperature of -25 °C to 50 °C, for instance -5 °C to 35 °C, more often 15 °C to 30 °C, for instance at room temperature, such as 18 °C to 25 °C. Preferably, the seed coating composition is applied to the seed by film coating. The film coating may suitably be applied by spraying the liquid coating composition onto the seed, typically while the seeds fall or flow through a coating apparatus. Preferably, the method comprises film coating of the seed to apply the seed coating composition in the form of a film coating composition.

Seed coating typically involves forming on the surface of the seeds a firmly adhering, moisture-permeable coating. The process typically comprises applying a liquid seed coating composition to the seeds before planting.

### Examples

### Example 1

Film coating formulations were prepared according to table 1. A PPP (plant protection products) cocktail was used consisting of 52.7 wt.% E2Y45 625FS (insecticide obtained from DuPont) and 47.3 wt.% Maxim Quattro (fungicide obtained from Syngenta). Soybean seeds were coated with a slurry of 43.1 wt.% PPP cocktail, 43.3 wt.% film coating formulations and 13.6 wt.% Color Coat Red (pigment concentrate from BASF); the application rate being 5.5 g/kg seeds, such that 2.38 g film coating formulation per kg seed was applied. A reference sample was prepared by coating soybean seeds with a slurry consisting of 43.1 wt.% PPP cocktail, 43.3 wt.% water and 13.6 wt.% Color Coat Red.

**Table 1: Composition of film-coat formulations**

| | **Film-Coat A** |
|---|---|
| water | 60 |
| rheology additive 1 | 0.2 |
| defoamer 1 | 0.1 |
| biocide 1 | 0.2 |
| vinyl acetate binder emulsion (50 %) | 25 |
| white pigment concentrate | 5 |
| red pigment concentrate | 9.5 |

| | **Film-Coat B** |
|---|---|
| water | 40.0 |
| rheology additive 1 | 0.13 |
| defoamer 1 | 0.07 |
| biocide 1 | 0.13 |
| vinyl acetate binder emulsion (50 %) | 16.7 |
| white pigment concentrate | 3.3 |
| red pigment concentrate | 6.3 |
| oil additive 1 | 33.3 |

| | **Film-Coat C** |
|---|---|
| water | 40.0 |
| rheology additive 1 | 0.13 |
| defoamer 1 | 0.07 |
| biocide 1 | 0.13 |
| vinyl acetate binder emulsion (50 %) | 16.7 |
| white pigment concentrate | 3.3 |
| red pigment | 6.3 |
| oil additive 2 | 33.3 |

| | **Film-Coat D** |
|---|---|
| wax 2 emulsion (50 %) | 78.59 |
| defoamer 2 | 0.01 |
| additive 1 | 1 |
| biocide 1 | 0.2 |
| rheology additive 1 | 0.2 |
| effect pigment | 20 |

| | **Film-Coat E** |
|---|---|
| water | 50.82 |
| starch 1 | 6.00 |
| defoamer 2 | 0.05 |
| additive 3 | 1.20 |
| effect pigment | 16.73 |
| biocide 1 | 0.20 |
| wax 3 emulsion (50 %) | 25.00 |

The release of chlorantraniliprole in water from coated soybean seeds was measured according to the following protocol. 6 treated soybean seeds were placed in a plastic centrifuge tube with 20 ml of deionised water. After one hour, the water was decanted off the seeds, sampled for LCMS analyses, and replaced by 20 ml of clean deionised water in the centrifuge tube containing the seeds. The same procedure was repeated after 2, 3, 4, 24 and 48 hours. Upon collecting the 48 hour water sample, the seeds were immersed into 10 ml of acetonitrile (AcN) to extract any residual active ingredient, all solvents were evaporated. Liquid Chromatrography Mass Spectrometry (LCMS) analyses were performed on the 1, 2, 3, 4, 24, 48 hours and AcN extraction samples. Samples were prepared by adding 2 ml of acetonitrile (containing 0.1 vol.% of trifluoroacetic acid) to the vials and shaking them at 40 °C for 30 minutes. Subsequently, 2 ml of deionised water (containing 0.1 vol.% of trifluoroacetic acid) were added, resulting in a total sample volume of 4 ml. These samples were shaken at 40 °C for 30 more minutes, after which they were filtered through a 0.2 microns filter.

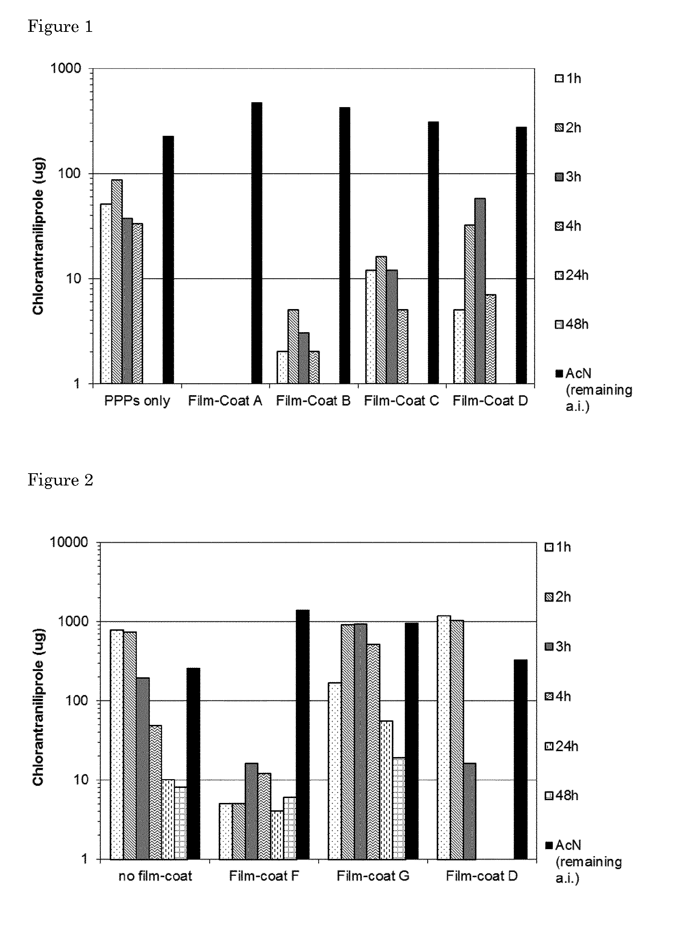

Figure 1 shows the release patterns of chlorantraniliprole in water measured on coated soybean seeds. The release patterns of chlorantraniliprole in water represented in figure 1 show that the reference soybean seeds sample coated without film-coat liquid displayed the fastest release profile. Using a standard film-coat formulation such as Film-Coat A, based on a polyvinyl acetate binder, resulted in no release of the active ingredient. The addition of oil additives 1 and 2 to formulations Film-Coat B and Film-Coat C resulted in an increased release rate of chlorantraniliprole in water and lower residual amounts of active on the seed after 48 hour release test. Film-Coat D formulation, based a high content of wax, resulted in an even faster release of the active in water and lower residual chlorantraniliprole on the seed at the end of the release test.

### Example 2

Film coating formulations were prepared according to tables 2 and 3. A PPP cocktail was used consisting of 45.2 wt.% E2Y45 625FS (insecticide obtained from DuPont), 47.3 wt.% Cruiser 5FS (insecticide obtained from Syngenta) and 7.5 wt.% Maxim Quattro (fungicide obtained from Syngenta). Corn seeds were coated with a slurry of 46.3 wt.% PPP cocktail, 2.7 wt.% Color Coat Red (pigment concentrate obtained from BASF), 19.4 wt.% film coating formulations, and 31.6 wt.% water; the application rate being 16.5 g/kg seeds, such that 3.20 g film coating formulation per kg seed was applied.

**Table 2: Composition of film-coat formulations**

| | **Film-Coat F** |
|---|---|
| water | 18.25 |
| rheology additive 2 | 13.27 |
| styrene acrylate binder emulsion (50 %) | 25.9 |
| defoamer 2 | 0.05 |
| additive 2 | 0.6 |
| effect pigment | 16.73 |
| biocide 1 | 0.2 |
| wax 1 emulsion (50 %) | 25 |

| | **Film-Coat G** |
|---|---|
| water | 47.21 |
| vinyl acetate binder emulsion (50 %) | 2 |
| rheology additive 1 | 0.3 |
| defoamer 1 | 0.1 |
| biocide 1 | 0.3 |
| biocide 2 | 0.09 |
| effect pigment | 20 |
| wax 1 emulsion (50 %) | 30 |

**Table 3: Composition of film-coat formulations**

| | **Film-Coat H** |
|---|---|
| wax 3 emulsion (50 %) | 74.0 |
| defoamer 2 | 0.05 |
| additive 1 | 0.75 |
| biocide 1 | 0.2 |
| effect pigment | 25 |

| | **Film-Coat I** |
|---|---|
| wax 4 emulsion (50 %) | 78.39 |
| defoamer 2 | 0.01 |
| additive 1 | 1.00 |
| biocide 1 | 0.20 |
| rheology additive 1 | 0.40 |
| effect pigment | 20.00 |

The release patterns of chlorantraniliprole in water from treated corn seeds were characterized following the same protocol as described in example 1, employing 6 coated corn seeds per test.

Figure 2 shows release patterns of chlorantraniliprole in water measured on coated corn seeds. The chlorantraniliprole release patterns in water from coated corn seeds displayed in figure 2 show again that the slurry treatment performed without film-coat formulation enabled a high release rate of the active in waters. When employing a film-coat formulation such as Film-Coat F, based on a styrene acrylate binder, the release was considerably slowed down. Film-Coat G, based on a lower binder/wax ratio, accelerated the release of the active in water, while Film-Coat D, based on a high wax content and no binder, enabled to obtain even higher release rates and residual amounts of active on the seeds similar to those obtained in the absence of film-coat formulation.

### Example 3

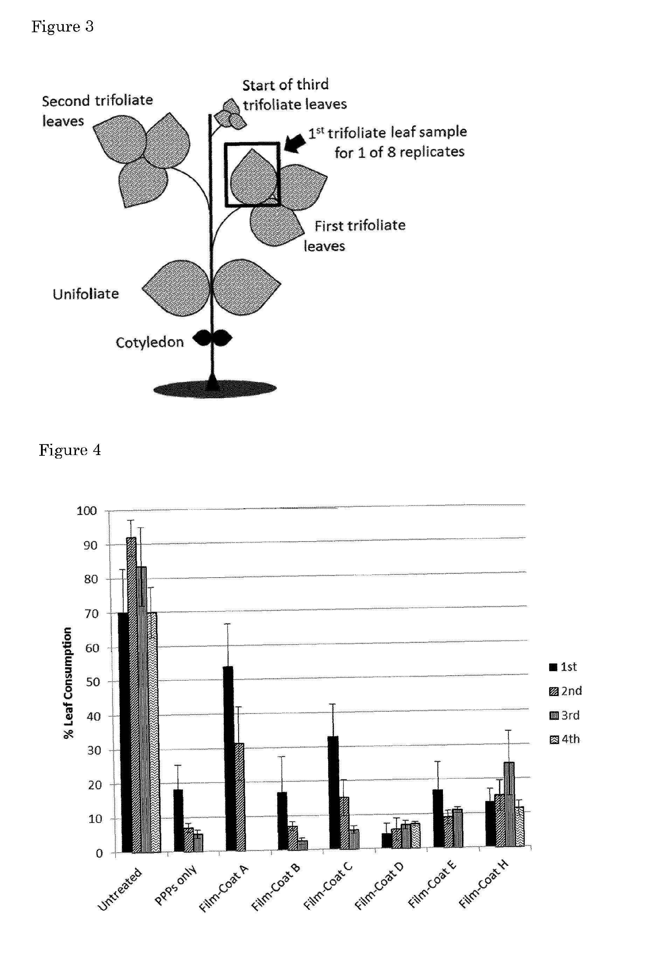

Soybean bioassays were performed by planting 12 seeds per treatment in a soil mixture composed of 51 % silt, 29 % clay, and 20 % sand. Plants were grown at about 20-25 °C, exposed to 12 hours of light per day, watered daily, and fertilised once per week. At each relevant trifoliate (1^{st} through 4^{th}), 8 total leaves were clipped for each treatment type at the base of the leaf, taking only one leaf per plant. Figure 3 shows the sampling procedure for 1^{st} trifoliate soybean leaves for a bioassay. Leaves were bioassayed by placing one soybean looper (*Pseudoplusia includens)* on one soybean leaf measuring 22 mm in diameter in a sealed tray at 25 °C, where it was allowed to feed on leaf material for four days. At that time leaf consumption and insect mortality was noted for each sample, where each data point is an average of eight leaves of the same treatment.

Figure 4 shows a comparison of % leaf consumption of the soybean leaf discs of various film-coats to that of untreated seeds and seeds treated with PPPs only. The positive control of untreated seeds show high leaf consumption and poor insect control, while the negative control of seeds treated with PPPs only show low leaf consumption and better insect control. Mirroring the release data, Film-Coat A shows relatively high leaf consumption, indicating that it is unable to successfully uptake the active into the plant and protect from insecticidal activity. Film-coats containing a vegetable oil (B and C), based on a wax (D and H), and containing starch as a binder (E) all show low leaf consumption similar to that of the PPP alone seeds. Film-Coat D is clearly the most effective at uptaking the actives and therefore controlling the insects, keeping leaf consumption under 10 % up to 4^{th} trifoliate.

### Example 4

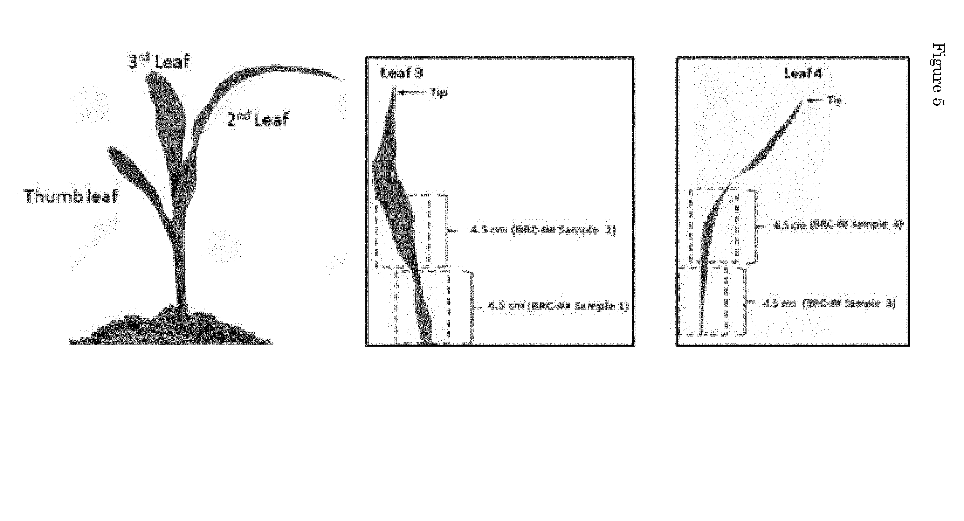

Corn bioassays were performed by planting 4 seeds per treatment in a soil mixture composed of 51 % silt, 29 % clay, and 20 % sand. Plants were grown at about 20-25 °C, exposed to 12 hours of light per day and watered daily. Typical period of plant growth consisted of three weeks from sowing to clipping of the leaves for bioassay. The leaves 3^{rd} and 4^{th} were clipped at the growth stage wherein, the fifth leaf was still in the whorl. The leaves were numbered as shown in the figure 5. The 3^{rd} leaf was clipped at 3 cm from the base and further divided into two sections (Sample 1 & 2) for bioassay. The 4^{th} leaf was clipped at the base and further sectioned into two parts as shown in the figure 5. For each treatment, leaves from three plants were collected totaling 12 samples per treatment. Each of the samples (4.5 cm section) were then placed in separate bioassay trays and one 2^{nd} instar larvae of fall armyworm (*Spodoptera frugiperda*) was introduced to each tray. The trays were then sealed and placed at 25 °C for four days. After four days, the % leaf consumption for each treatment (12 samples) were averaged to compared the efficacy of the across various treatment.

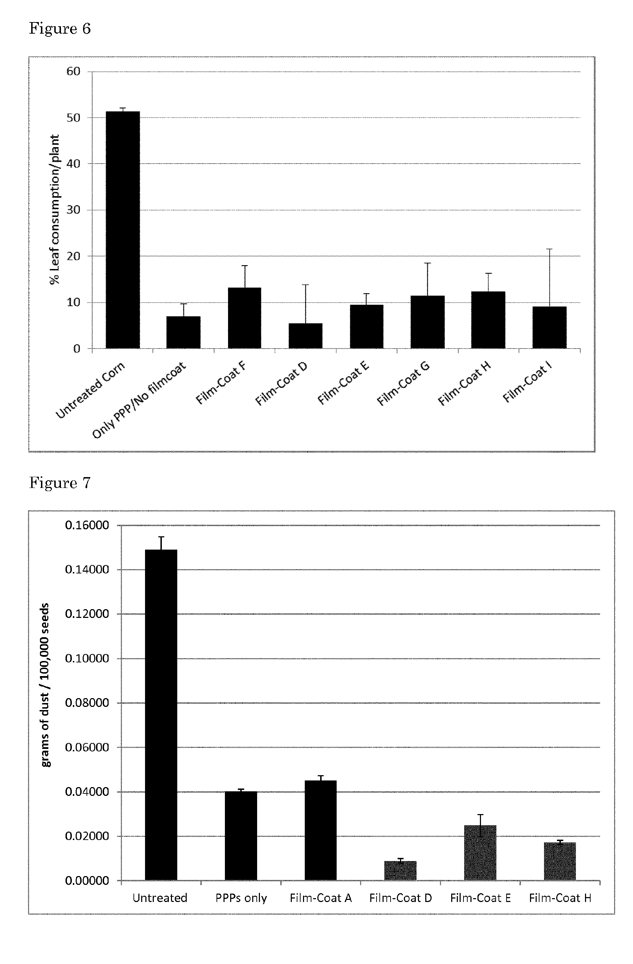

Figure 6 shows the % leaf consumption of the leaf tissue from corn treated with different film-coats. The lower the leaf consumption, higher is the efficacy of the coating in releasing the actives thereby leading to better insect control. Leaf tissue from Untreated Corn seeds was tested as the negative control resulting in very high leaf consumption. The actives without any film-coat was tested as the positive control owing to the fact that having no film-coat could effortlessly release the actives and improve uptake by the plant. Of the film-coats tested, Film-Coat D provided superior bioefficacy comparable to the positive control followed by Film-Coat I. The high wax content in these filmcoats provided faster release of actives from the coating and resulted in better uptake by plants. In addition, to high wax based coating, coatings based on water soluble binder Film-coat E also showed leaf consumption below 10 % owing to better solubility of Film-Coat E in water resulting in faster release of actives.

### Example 5

In addition to facilitating the uptake of actives, the new film coats are also able to reduce the amount of dust-off produced by soybeans. 100 grams of seeds were submitted to a 2-minute Heubach test in duplicate, averaging the results to a total amount of dust-off per 100 000 seeds (figure 7). In the case of soybeans, untreated seeds give off about 0.14897 g of dust per 100 000 seeds, which can be reduced about 4-fold when the seeds are treated with PPPs alone or traditional Film-Coat A. Use of the wax-based Film-Coat D and Film-Coat H, however, result in a further 4.5 and 2 fold decrease in dust, respectively, from that of PPP alone treated seeds. Starch-based Film-Coat E also allows for a 1.5 fold decrease in dust over the PPP alone treated seeds.

### Example 6

If not carefully treated, seeds coated with actives and other enhancements result in harmful levels of dust during handling and processing of huge quantities of seeds. One of the primary objectives of a filmcoating is to retain the actives on the seed and reduce dust while in operation. In addition to improving bioefficacy, the filmcoats were also tested for dust reduction and abrasion resistance. Dust and abrasion data for corn treated with film-coats were obtained by following industry standards. Specific amount of seeds were placed in the Heubach apparatus and tested for 4 minutes. The dust collected on the filter paper was gravimetrically measured to evaluate different filmcoat formulation.

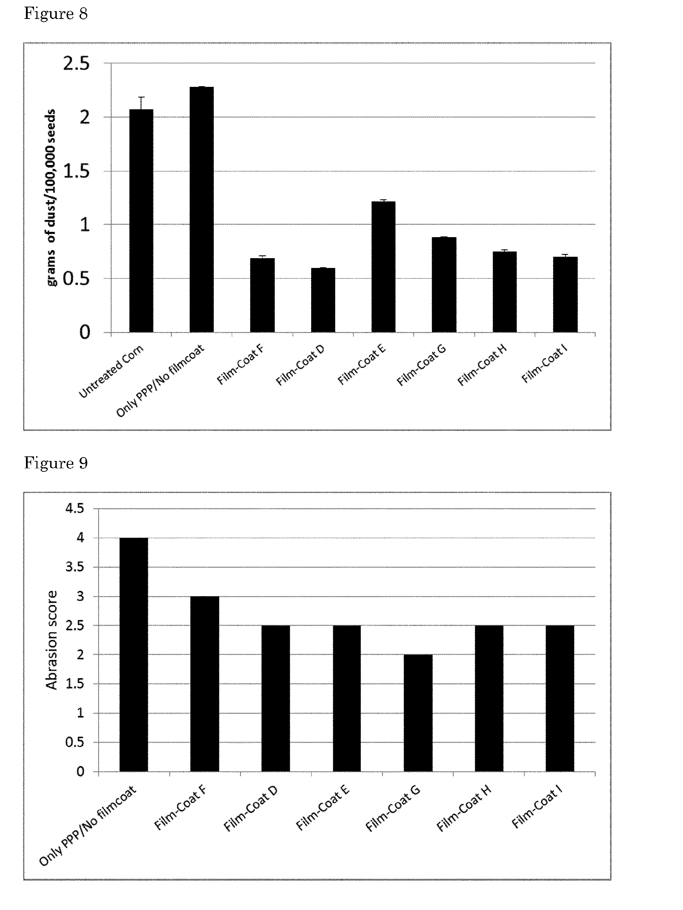

Figure 8 shows the dust (g / 100 000 seeds) for the different filmcoat formulations tested on corn. Film-coat D showed about 75 % lower dust when compared to PPP alone. Film-coat F showed similar performance, which was expected as it contains an acrylate-based binder system that is well-known for containing dust levels. Filmcoats G, H and I are all based on high wax content and showed statistically similar dust levels reducing dust about 60-65 % than PPP alone.

Abrasion on the corn seed was visually observed after the dust experiment in the Heubach apparatus. The abrasion score is a visual quantification of the quality of seeds after subjecting them to 4 minutes in the Heubach apparatus closely simulating handling conditions in the industry. The abrasion score was allocated from 1 (high abrasion resistance/good quality seeds) to 5 (low abrasion resistance/poor quality seeds). All of the filmcoat formulations showed abrasion score of 2-2.5, while seeds with only PPP/no filmcoat showed high abrasion and poor quality seeds. Figure 9 shows corn abrasion scores determined after 4 min Heubach tests (1: high abrasion resistance; 5: poor abrasion resistance).

### Example 7

Rate of drying of seeds is another important feature that is considered when choosing filmcoat. The rate of drying is checked by using a cotton indicator. The coated seeds, after exiting the coater is collected in a flat tray and a timer is activated. The drying is checked every 5-10 s by placing a fresh cotton indicator at a new seeds' surface in the seed tray each time. The moment there is no sign of colour transfer on the cotton indicator from the seed, the timer is stopped and the time is recorded

Clumping/Bridging of seeds takes place when wet seeds exiting out of the coater are collected in the storage hopper and compacted by oncoming seeds. This presents a challenge to the seed treatment facility in terms of equipment blocking, labor and time. The filmcoats described in this embodiment show faster drying times and minimal to no clumping.

New film coats minimise dry time, tack, and clumping on soybeans. Use of traditional Film-Coat A and PPP alone treated seeds result in longer dry time, noticeable tack upon exiting the coater, and clumping after being allowed to sit under 1 kg of weight for 5 minutes. All of the new film coats discussed previously allow for a noticeably faster dry time, decrease in tackiness upon exiting the coater, and an elimination of clumping all together (summarised in table 4).

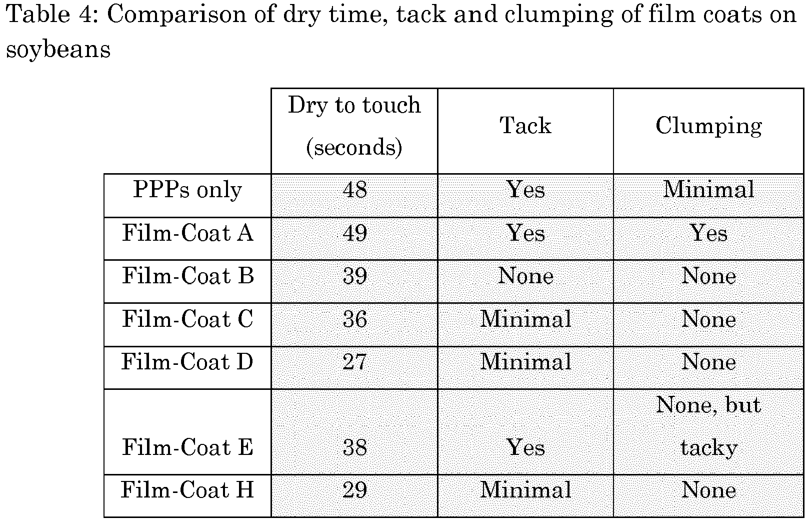

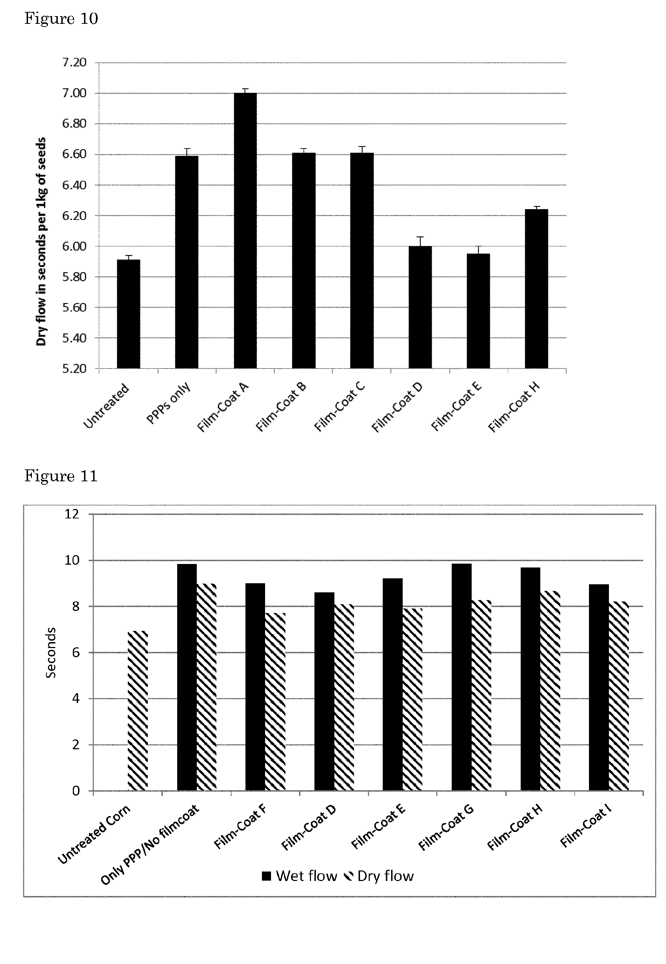

Dry flow of soybeans was measured as the time it took for 1 kg of seeds to flow through a funnel. Typically, the addition of PPPs and traditional film-coats to soybeans slows down the flow of seeds considerably (figure 10), which is not a desired characteristic. In fact, the addition of Film-Coat A to soybean seeds decreased flow more than a full second compared to untreated seeds. New Film-Coats D, E, and H are able to effectively decrease flow time considerably, allowing flow almost as fast as untreated seeds.

### Example 8

Rate of drying of seeds is another important feature that is considered when choosing filmcoat. The rate of drying is checked by using a cotton indicator. The coated seeds, after exiting the coater is collected in a flat tray and a timer is activated. The drying is checked every 5-10 s by placing a fresh cotton indicator at a new seeds surface in the seed tray each time. The moment there is no sign of colour transfer on the cotton indicator from the seed, the timer is stopped and the time is recorded.

Clumping/Bridging of seeds takes place when wet seeds exiting out of the coater are collected in the storage hopper and compacted by oncoming seeds. This presents a challenge to the seed treatment facility in terms of equipment blocking, labor and time. The filmcoats described in this embodiment show faster drying times and minimal to no clumping.

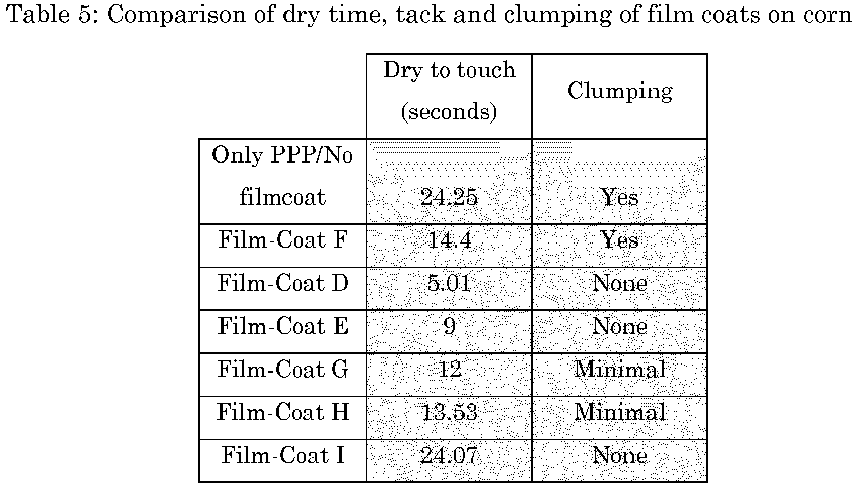

The flow of treated/coated seeds is important at the seed treating facility as well as at the farm whilst going through the planter. Lower the friction between the seeds, better is the efficiency at various stages. Flow is typically improved by incorporating a flow agent or a slip agent into the fimcoat formulation. A flow agent is typically a wax-based additive that lowers friction and improves the appearance of the seed. For the testing the flow of treated seeds, 1 kg of seeds are placed in a funnel fitted with a stopper. The stopper is opened and timer started simultaneously. The time taken for the last seed to exit the funnel is recorded as the flow rate in (s/kg). The results are shown in figure 11.

## Claims

1. Seed coating composition for combining with one or more biologically active ingredients, wherein said seed coating composition comprises a wax and/or polymeric carbohydrate and wherein said seed coating composition has an amount of polymeric binder excluding wax and polymeric carbohydrate of 10 % or less by total weight of the wax and polymeric carbohydrate together.

2. Seed coating composition according to claim 1, wherein the wax is selected from the group consisting of natural wax, mineral wax and synthetic wax, preferably the wax is selected from the group consisting of polyethylene wax, carnauba wax, paraffin wax, polypropylene wax, oxidised polyethylene wax, montan wax, ceresin wax, ozocerite, peat wax, Fischer-Tropsch wax, amide wax, ethylene-acrylic acid wax, polyolefin wax, ethylene *bis* stearamide wax, bees wax, lanolin wax, sugar cane wax, palm wax, and vegetable wax.

3. Seed coating composition according to claim 1 or 2, wherein said wax is anionic or non-ionic.

4. Seed coating composition according to any one of claims 1-3, wherein the wax is selected from the group consisting of polyethylene wax, Fischer-Tropsch wax, and carnauba wax.

5. Seed coating composition according to any one of claims 1-4, wherein said seed coating composition has an amount of polymeric binder excluding wax and polymeric carbohydrate of 8 % or less by total weight of the wax and polymeric carbohydrate together, preferably 6 % or less, such as 4 % or less, 2 % or less, or 1 % or less.

6. Seed coating composition according to any one of claims 1-5, wherein the seed coating composition is essentially free from polymer binder excluding wax and polymeric carbohydrate.

7. Seed coating composition according to any one of claims 1-6, wherein said seed coating composition comprises a total of wax and polymeric carbohydrate in an amount of 10-50 % by total weight of the seed coating composition, preferably in an amount of 15-45 %, more preferably in an amount of 20-40 %.

8. Seed coating composition for combining with one or more biologically active ingredients, wherein said seed coating composition comprises a binder and wherein said seed coating composition comprises at least one vegetable oil.

9. Seed coating composition according to claim 8, wherein said binder is a water insoluble binder, and is preferably selected from the group consisting of polyvinyl acetates, polyvinyl acetate copolymers, polyurethane, celluloses (including ethyl celluloses, water insoluble polymeric carbohydrates (including polysaccharides such as starch), fats, oils, alkyds, water insoluble proteins, shellacs, vinylidene chloride, vinylidene chloride copolymers, polyacrylic esters, polyacrylic esters copolymers, styrene-acrylic copolymers, polyvinylacrylates, styrene-butadiene copolymers, zeins, casein, chitosan, polypropylene glycol, syrups, carnauba wax, paraffin wax, polyethylene wax, bees wax, and polypropylene wax.

10. Seed coating composition according to claim 8 or 9, wherein said at least one vegetable oil is selected from the group consisting of rapeseed oil, canola oil, soybean oil, coconut oil, corn oil, cottonseed oil, palm oil, sunflower oil, linseed oil, olive oil and sesame oil, or any of a host of synthetic oils.

11. Seed coating composition according to any one of claims 8-10, wherein the binder is present in an amount of 1-40 % by total weight of the binder and vegetable oil together, such as 2-30 %, or 5-25 %.

12. Seed coating composition according to any one of claims 8-11, wherein the at least one vegetable oil is present in an amount of 40-80 % by total weight of the binder and vegetable oil together, such as 50-70 %.

13. Seed coating composition according to any one of claims 1-12 in combination with one or more active ingredients, wherein the one or more active ingredients preferably comprise at least one hydrophobic and/or water insoluble active ingredient.

14. Method for improving the bio-efficacy and/or systemic uptake by plants of one or more active ingredients in a seed coating, comprising preparing a seed coating composition according to any one of claims 1-13 and applying said seed coating composition to seed in combination with said one or more active ingredients.

15. Coated seed, comprising a seed coating composition according to any one of claims 1-13.

16. Seed coating composition according to any one of claims 1-13, that accelerates drying by an additional 15-25 % based on water content thereby significantly reducing bridging/clumping of coated seeds.

17. Seed coating composition according to any one of claims 1-13, that significantly reduces the coefficient of friction between coated seeds and improves flowability during processing.
